# EUROPÄISCHE PATENTSCHRIFT

(11) **EP 4 193 411 B1**
(45) Veröffentlichungstag und Bekanntmachung des Hinweises auf die Patenterteilung: **23.07.2025**
(21) Anmeldenummer: 21763275.1
(22) Anmeldetag: 10.08.2021
(51) Int. Cl.: H01M 10/04, H01M 10/052, H01M 10/0585

(54) **VERFAHREN UND VORRICHTUNG ZUR HERSTELLUNG EINES ELEKTRODENSTAPELS**
METHOD AND APPARATUS FOR PRODUCING AN ELECTRODE STACK
PROCÉDÉ ET DISPOSITIF POUR PRODUIRE UN EMPILEMENT D'ÉLECTRODES

(30) Priorität: 17.08.2020 DE 102020210440
(43) Veröffentlichungstag der Anmeldung: 14.06.2023
(73) Patentinhaber: PowerCo SE, 38239 Salzgitter (DE)
(72) Erfinder: JORDAN, Marco, 38229 Salzgitter (DE)
(74) Vertreter: FDST Patentanwälte
(86) Internationale Anmeldenummer: PCT/EP2021/072222
(87) Internationale Veröffentlichungsnummer: WO 2022/037994

(56) Entgegenhaltungen:
- EP-A2- 2 648 263
- WO-A1-2017/073677
- WO-A1-2020/120109
- DE-A1- 102018 219 079
- JP-A- 2018 006 216

## Beschreibung

Die Erfindung betrifft ein Verfahren sowie eine Vorrichtung zur Herstellung eines Elektrodenstapels für eine Lithium-Ionen-Batterie.

Eine solche Lithium-Ionen-Batterie weist zumindest eine Batteriezelle auf, in welcher ein Elektrodenstapel mit einer Anzahl an blattartigen Kathoden (Kathodenblättern) und blattartigen Anoden (Anodenblättern) aufgenommen ist, wobei die Kathoden und die Anoden beispielsweise übereinander gestapelt sind. Je nach Aufbau der Batterie ist zwischen den Kathoden und den Anoden jeweils ein Separator oder - im Falle einer Festkörper-Lithium-Ionen-Batterie - ein fester Elektrolyt angeordnet, der die Anoden und Kathoden voneinander separiert.

Der Elektrodenstapel mit übereinandergestapelten Anoden und Kathoden wird beispielsweise mittels des sogenannten Einzelblattstapelns hergestellt. Typischerweise werden die einzelnen Anoden und die Kathoden hierbei mittels eines Greifersystems (Greifsystems) bewegt. Anhand eines Greifers dieses Greifersystems werden alternierend die Anoden und die Kathoden aufgenommen, an einen Stapelort gefördert und dort abgelegt.

Alternativ hierzu kann ein solcher Elektrodenstapel mittels des sogenannten Z-Foldings hergestellt werden. Dabei wird ein Separatorband z-förmig (zickzackförmig) gefaltet, wobei alternierend nach jedem Faltvorgang mittels eines Greifersystems eine Anode bzw. eine Kathode auf den Z-Schenkel des Separatorbandes gelegt wird.

Solche Greifersysteme sind allerdings vergleichsweise langsam. Weiterhin ist hierbei für das alternierende Aufeinanderstapeln der Anoden und der Kathoden eine vergleichsweise lange Zeitdauer notwendig, so dass der Herstellungsprozess eines solchen Elektrodenstapels nachteilig vergleichsweise zeitaufwändig ist.

Aus der EP 2 648 263 A2 ist eine Batteriezellen-Herstellungsvorrichtung bekannt. Diese umfasst eine Einheitszellen-Stapeleinheit, in die Einheitszellen von oben eingeführt werden und in der die Einheitszellen sequentiell gestapelt werden, sowie eine Verpackungseinheit zum Umhüllen einer Außenseite des Einheitszellen-Stapels mit einer Trennfolie.

In der JP 2018 006216 A und in der WO 2017/073677 A1 ist jeweils eine Laminiervorrichtung offenbart, bei der Anoden und Kathoden von gegenüberliegenden Seiten in einen Laminierbereich gefördert werden.

Aus der WO 2020/120109 A1 ist ein Verfahren zur Herstellung eines Elektrodenstapels bekannt, bei dem Kathoden greiferlos in einer ersten Richtung in eine Kammer gefördert werden, und bei dem Anoden in einer zweiten Richtung greiferlos in die Kammer gefördert werden.

Der Erfindung liegt die Aufgabe zugrunde, ein besonders geeignetes Verfahren sowie eine Vorrichtung zur Herstellung eines Elektrodenstapels für eine Lithium-Ionen-Batterie anzugeben. Insbesondere soll mittels des Verfahrens und/oder mittels der Vorrichtung eine möglichst zeitsparende Herstellung des Elektrodenstapels realisiert sein.

Bezüglich des Verfahrens wird die genannte Aufgabe durch die Merkmale des Anspruchs 1 und hinsichtlich der Vorrichtung durch die Merkmale des Anspruchs 5 erfindungsgemäß gelöst. Vorteilhafte Weiterbildungen und Ausgestaltungen sind Gegenstand der Unteransprüche. Dabei gelten die Ausführungen im Zusammenhang mit der Vorrichtung sinngemäß auch für das Verfahren und umgekehrt.

Das Verfahren dient der Herstellung eines Elektrodenstapels aus Anoden und Kathoden. Der Elektrodenstapel ist dabei für eine Lithium-Ionen-Batterie (Li-lonen-Batterie), insbesondere für eine Lithium-Ionen-Batterie zum Antreiben eines elektrisch angetriebenen Kraftfahrzeugs, vorgesehen.

Die Anoden und die Kathoden sind blattartig ausgebildet. Die zusammenfassend auch als Elektroden bezeichneten Anoden und Kathoden weisen also in einer Raumrichtung eine vergleichsweise kleine Ausdehnung auf, mit anderen Worten sind die Elektroden flächig ausgebildet. Die Elektroden werden auch als Elektrodenblätter (sheets), die Anoden und die Kathoden entsprechend als Anodenblätter bzw. Kathodenblätter bezeichnet.

Verfahrensgemäß werden zunächst die Anoden und die Kathoden in einen auch als Stapelfach oder als Stapelkammer bezeichneten Fertigungsbereich gefördert. Zweckmäßigerweise ist jede der Anoden oder jede der Kathoden dabei mit einem Separator versehen. Insbesondere ist jede der Anoden oder jede der Kathoden beidseitig mit einer Separatorfolie laminiert. Sind die Anoden und die Kathoden für eine Festkörper-Lithium-Ionen-Batterie vorgesehen, so ist jede der Anoden und/oder jede der Kathoden zweckmäßigerweise mit festem Elektrolyt versehen.

Alternativ hierzu wird eine Anzahl an Monozellen in den Fertigungsbereich gefördert. Dabei weist jede der Monozellen eine (einzige) der Anoden und eine (einzige) der Kathoden auf. Zweckmäßigerweise ist bei jeder der Monozellen sowohl zwischen der Anode und der Kathode ein erster Separator als auch an der der Anode abgewandten Seite der Kathode oder an der der Kathode abgewandten Seite der Anode ein zweiter Separator angeordnet. Geeigneter Weise sind die Anode, die Kathode und die beiden Separatoren mittels eines Laminationsprozesses miteinander gefügt. Sofern die Monozellen dagegen für eine Festkörper-Lithium-Ionen-Batterie vorgesehen sind, so ist die Anode und/oder die Kathode jeder Monozelle zweckmäßigerweise mit festem Elektrolyt versehen.

Die Anoden und die Kathoden bzw. die Monozellen werden gemäß dem Verfahren bezüglich einer Hochrichtung (Z-Richtung) beabstandet zu einem Boden des Fertigungsbereichs in diesen Fertigungsbereich gefördert. Somit verlassen die Anoden und die Kathoden bzw. die Monozellen eine für diesen Fördervorgang vorgesehene und eingerichtete Fördereinrichtung beabstandet zum Boden. Folglich sinken die Anoden und die Kathoden bzw. die Monozellen nach deren Fördervorgang in den Fertigungsbereich aufgrund der Schwerkraft entgegen der Hochrichtung zum Boden hin ab.

Weiterhin wird innerhalb des Fertigungsbereichs durch Einleiten von Luft ein Luftstrom (eine Luftströmung) erzeugt. Der Luftstrom ist dabei derart erzeugt, dass dieser eine solche Strömungsstärke und/oder eine solche Strömungsrichtung aufweist, dass die Anoden und die Kathoden bzw. gemäß der Alternative die Monozellen zueinander oder bezüglich einer vorgegebenen Sollposition ausgerichtet werden während diese zum Boden des Fertigungsbereichs hin absinken.

Zusammenfassend wird innerhalb des Fertigungsbereichs ein Luftstrom derart erzeugt, dass die Anoden und die Kathoden bzw. die Monozellen im Zuge deren Absinken zueinander und/oder bezüglich einer Soll-Position ausgerichtet werden. Infolgedessen werden die Anoden und die Kathoden bzw. die Monozellen nach deren Absinken unter Bildung des Elektrodenstapels zueinander ausgerichtet aufeinandergestapelt. Vorteilhaft weist der Elektrodenstapel also zueinander ausgerichtete Anoden und Kathoden bzw. zueinander ausgerichtete Monozellen auf. Somit ist eine vorgegebene (Soll-)Stapelgenauigkeit in einfacher Weise erreicht.

Zudem erfolgt das Ausrichten der Anoden und der Kathoden bzw. der Monozellen anhand des Luftstroms, insbesondere im Vergleich zu den eingangs erwähnen Stapelmethoden mit einem Greifersystem, vergleichsweise schnell. Weiter vorteilhaft ist dabei die Gefahr einer Beschädigung der Anoden und der Kathoden bzw. der Monozellen durch den Luftstrom vergleichsweise gering.

Geeigneter Weise werden die Anoden und die Kathoden alternierend (zeitlich) nacheinander in den Fertigungsbereich gefördert, so dass die Anoden und die Kathoden des Elektrodenstapels alternierend aufeinandergestapelt sind. Bei der alternativen Ausgestaltung des Verfahrens mit Monozellen anstatt der separaten Anoden und Kathoden werden die Monozellen in analoger Weise (zeitlich) nacheinander in den Fertigungsbereich gefördert. Vorzugsweise werden für eine vergleichsweise hohe Stapelrate die Kathoden und die Anoden bzw. die Monozellen dabei in den Fertigungsbereich gefördert, während die vorangegangene Anode oder Kathode bzw. die vorangegangene Monozelle noch im Absinken sind. Der Fertigungsbereich weist hierzu eine entsprechende Höhe, also eine entsprechende Ausdehnung in Hochrichtung, auf. Folglich sind mehrere Anoden und Kathoden bzw. mehrere Monozellen gleichzeitig im Absinken.

Alternativ zum Fördervorgang, gemäß welchen die Anoden und Kathoden bzw. die Monozellen zeitlich nacheinander in den Fertigungsbereich gefördert werden, werden gemäß einer geeigneten Weiterbildung die Anoden und die Kathoden oder eine Teilanzahl der Anoden und der Kathoden zeitlich vor deren Fördervorgang in den Fertigungsbereich, zweckmäßigerweise alternierend, aufeinander gelegt und anschließend aufeinander liegend in den Fertigungsbereich gefördert. Bei der Variante des Verfahrens mit Monozellen anstatt der separaten Anoden und Kathoden werden die Monozellen oder eine Teilanzahl der Monozellen zeitlich vor deren Fördervorgang in den Fertigungsbereich aufeinandergelegt und anschließend aufeinander liegend in den Fertigungsbereich gefördert. Allenfalls ist es bei hierbei nicht notwendig, dass die Anoden und die Kathoden bzw. die Monozellen vor dem Fördervorgang zueinander ausgerichtet aufeinandergelegt werden, da die Ausrichtung der Anoden und der Kathoden bzw. der Monozellen anhand des Luftstromes innerhalb des Fertigungsbereichs erfolgt. Auf diese Weise ist es vorteilhaft ermöglicht, je Zeiteinheit eine vergleichsweise große Anzahl an Anoden und Kathoden bzw. eine vergleichsweise große Anzahl an Monozellen in den Fertigungsbereich zu fördern und somit die Herstellungszeit des Elektrodenstapels zu verringern.

Verfahrensgemäß wird zum Ausrichten der Anoden und der Kathoden bzw. zum Ausrichten der Monozellen anhand des Luftstroms die Luft von zwei gegenüberliegenden Seiten des Fertigungsbereichs unter jede der in den Fertigungsbereich geförderten und absinkenden Anoden und unter jede der in den Fertigungsbereich geförderten und absinkenden Kathoden bzw. unter jede der in den Fertigungsbereich geförderten und absinkenden Monozellen eingeleitet, insbesondere eingeblasen. Da, sofern also mehr als eine Elektrode bzw. mehr als eine Monozelle gleichzeitig im Fertigungsbereich absinken, diese in Hochrichtung zueinander beabstandet sind, wird vorzugsweise entsprechend deren Abstand in Hochrichtung zueinander beabstandet Luft unter jede der Elektroden bzw. unter jede der Monozellen eingeleitet. Alternativ hierzu erfolgt das Einleiten der Luft auf einer (einzigen) Höhe bezüglich des Bodens, sodass zeitlich aufeinanderfolgend unter jede der Anoden und unter jede der Kathoden bzw. unter jede der Monozellen eingeleitet wird.

Dabei wird die Luft zur Erzeugung des Luftstroms und zum Ausrichten der Anoden und der Kathoden bzw. der Monozellen entweder parallel zum Boden des Fertigungsbereichs oder lediglich geringfügig gegen den Boden, insbesondere nach oben (also in Hochrichtung), geneigt in dem Fertigungsbereich eingeleitet. Unter geringfügig geneigt ist hierbei zu verstehen, dass ein Winkel zwischen dem Boden und der Einleitrichtung der Luft maximal 30° beträgt.

Vorzugsweise ist die eingeleitete Luft ionisiert. Aufgrund der zumindest geringfügigen Leitfähigkeit der Luft ist somit ein elektrostatisches Aufladen der Elektroden bzw. der Monozellen verhindert oder zumindest reduziert. Somit ist vorteilhaft ein Aneinanderhaften der Anoden und der Kathoden bzw. der Monozellen wegen elektrostatischer Aufladung verhindert. Zudem ist eine Verschmutzung der Elektroden bzw. der Monozellen durch elektrostatisch angezogene Staubpartikel verhindert.

Durch das, vorzugsweise aufeinander gerichtete, Einleiten der Luft von den einander gegenüberliegenden Ausrichteinheiten bildet sich unter der jeweiligen Elektrode bzw. unter der jeweiligen Monozelle eine Verwirbelung. Die eingeleitete Luft verbleibt zeitweise unter der jeweiligen Anode oder unter der jeweiligen Kathode bzw. unter der jeweiligen Monozelle. Dies wirkt wie eine Art Luftkissen, so dass das Absinken entsprechend verlangsamt wird.

Die unter die Elektroden bzw. unter die Monozellen eingeleitete Luft strömt seitlich der Elektroden bzw. der Monozellen, also durch einen zwischen den Elektroden bzw. den Monozellen und der seitlichen Begrenzung des Fertigungsbereichs, insbesondere in Hochrichtung, aus dem Fertigungsbereich. Aufgrund des seitlichen Vorbeiströmens wirkt eine Kraft auf die jeweilige Anode oder die jeweilige Kathode bzw. auf die jeweilige Monozelle, wobei die Kraft die jeweilige Anode oder die jeweilige Kathode bzw. die jeweilige Monozelle zu einer Mittelachse des Fertigungsbereichs hin ausrichtet.

Zusätzlich wirkt eine (Reibungs-)Kraft auf die jeweilige Anode oder die jeweilige Kathode bzw. die jeweilige Monozelle, welche durch das Einleiten der Luft bewirkt wird und die jeweilige Anode oder die jeweilige Kathode bzw. die jeweilige Monozelle ebenfalls zu einer Mittelachse des Fertigungsbereichs hin ausrichtet.

Bei der gegen den Boden nach oben geneigter Einleitung der Luft gibt es zusätzlich eine Komponente der Luftströmung in Hochrichtung, sodass das Absinken der Anoden und der Kathoden bzw. der Monozellen weiter verlangsamt ist.

Vorteilhafterweise ist ein vergleichsweise leichtes Ausrichten der Anoden und der Kathoden bzw. der Monozellen ermöglicht, da eine entgegenwirkende Reibkraft des Luftkissens vergleichsweise gering ist.

Zusammenfassend wird das Absinken der Anoden und der Kathoden aufgrund des Luftkissens und/oder aufgrund des geneigten Einleitens der Luft zwar verlangsamt. Dennoch ist ein solches Stapelverfahren, insbesondere im Vergleich zu den eingangs erwähnten Stapelverfahren mit einem Greifersystem, vergleichsweise schnell.

Gemäß einer vorteilhaften Ausgestaltung des Verfahrens wird die Luft zeitlich konstant, also gleichbleibend, hinsichtlich der Einleitrichtung und hinsichtlich der Strömungsstärke in den Fertigungsbereich eingeleitet. Ein derartiges Einleiten der Luft ist vergleichsweise einfach möglich.

Besonders bevorzugt wird in Hochrichtung beabstandet zueinander an mehreren Stellen Luft in der oben dargestellten eingeleitet. Vorzugsweise ist dabei die Strömungsstärke der einzuleitenden Luft kleiner, je näher diese zum Boden eingeleitet wird. Mit anderen Worten ist vorzugsweise ein Gradient mit abnehmender Strömungsstärke der einzuleitenden Luft entgegen der Hochrichtung vorgesehen bzw. eingestellt. Die absinkenden Anoden und Kathoden bzw. die absinkenden Monozellen sind, je näher diese dem Boden sind, zunehmend ausgerichtet. Folglich ist für das Ausrichten eine durch den Luftstrom kleinere Stromstärke notwendig. Somit ist ein vergleichsweise effizienter Ausrichtvorgang realisiert.

Alternativ hierzu sind die Strömungsstärke und/oder die Einleitrichtung der für die Erzeugung des Luftstroms einzuleitenden Luft einstellbar. Somit ist während des Absinkens der Anoden und der Kathoden bzw. der Monozellen der Luftstrom veränderbar und/oder, insbesondere an eine Absinkgeschwindigkeit und/oder an eine Position der Anoden und der Kathoden bzw. der Monozellen innerhalb des Fertigungsbereichs, anpassbar. Das Ausrichten der einzelnen Elektroden bzw. Monozellen ist infolgedessen vergleichsweise schnell möglich.

Die Vorrichtung ist zur Herstellung eines Elektrodenstapels aus Anoden und Kathoden für eine Lithium-Ionen-Batterie, beispielsweise für eine (Traktions-) Batterie eines elektrisch angetriebenen Kraftfahrzeugs, eingerichtet und geeignet. Dabei wird der Elektrodenstapel mittels der Vorrichtung gemäß einer der oben dargelegten Varianten des Verfahrens hergestellt.

Hierzu weist die Vorrichtung eine Fördereinrichtung auf. Diese dient dem Fördern der Anoden und der Kathoden oder dem Fördern der Monozellen, welche jeweils einer der Anoden und einer der Kathoden aufweist, in einen Fertigungsbereich. Dabei ist die Fördereinrichtung in Hochrichtung beabstandet zu einem Boden des Fertigungsbereichs angeordnet, so dass die Anoden und die Kathoden, bzw. die Monozellen unmittelbar nach dem Verlassen der Fördereinrichtung beabstandet zum Boden im Fertigungsbereich sind, und infolge dessen entgegen der Hochrichtung zum Boden hin absinken.

Des Weiteren weist die Vorrichtung mindestens zwei Ausrichteinheiten auf. Jede der Ausrichteinheiten weist wiederum mindestens einen Luftauslass auf, anhand welchem ein Luftstrom zum Ausrichten der Anoden und der Kathoden bzw. zum Ausrichten der Monozellen erzeugbar ist. Vorzugsweise weist jede der Ausrichteinheiten mehrere Luftauslässe auf, welche in Hochrichtung und/oder in einer Richtung quer zur Hochrichtung nebeneinander angeordnet sind. Beispielsweise sind die Luftauslässe jeweils als eine Luftdüse oder als ein Diffusor ausgebildet. Zweckmäßigerweise sind die Luftauslässe mit einem Gebläse, einem Kompressor oder dergleichen strömungstechnisch verbunden.

Die Ausrichteinheiten begrenzen dabei den Fertigungsbereich in bzw. gegen eine quer zur Hochrichtung orientierten Richtung (X-Richtung) zumindest abschnittsweise. Beispielsweise sind die Ausrichteinheiten als eine Platte ausgebildet, in welche die Luftauslässe eingebracht sind, wobei die Normale der von der Platte aufgespannten Ebene in den Fertigungsbereich zeigt.

Also begrenzt eine der Ausrichteinheiten den Fertigungsbereich in X-Richtung und die andere Ausrichteinheit entgegen der X-Richtung. Mit anderen Worten ist der Fertigungsbereich zwischen den beiden Ausrichteinheiten angeordnet.

Besonders bevorzugt weist die Vorrichtung mindestens zwei weitere Ausrichteinheiten mit Luftauslässen auf, die den Fertigungsbereich in analoger weise in bzw. entgegen der Y-Richtung begrenzt, welche senkrecht zur Hochrichtung und senkrecht zur X-Richtung orientiert ist. Somit auch ist zum Ausrichten der Elektroden bzw. der Monozellen auch Luft in bzw. gegen Y-Richtung einleitbar.

Besonders bevorzugt ist der Luftstrom derart ausgebildet, dass die Anoden und die Kathoden bzw. die Monozellen die Ausrichteinheiten im Zuge deren Absinken nicht berühren, so dass die Gefahr einer Beschädigung vermieden ist. Im Fehlerfall, beispielsweise bei Ausfall der Luftströmung oder eines Teils davon, verhindern die Ausrichteinheiten ein Entweichen der Anoden und der Kathoden bzw. der Monozellen aus dem Fertigungsbereich.

Gemäß einer vorteilhaften Ausgestaltung sind die Ausrichteinheiten quer zur Hochrichtung des Fertigungsbereichs verfahrbar. Insbesondere sind die einander gegenüberliegenden Ausrichteinheiten aufeinander zu und voneinander weg verfahrbar.

Auf diese Weise ist der Spalt (Raum) zwischen den Außenkanten der absinkenden Anoden und Kathoden bzw. der absinkenden Monozellen und den Ausrichteinheiten, welchen den Fertigungsbereich begrenzen, veränderbar. Entsprechend der (räumlichen) Ausdehnung des Spaltes strömt die unter die jeweilige Elektrode bzw. die unter die jeweilige Monozelle eingeleitete Luft schneller oder langsamer seitlich an der Elektrode bzw. an der Monozelle durch den Spalt und aus dem Fertigungsbereich. Folglich ist die Sinkgeschwindigkeit größer, je größer dieser Spalt ist.

Zusammenfassend ist anhand des Verfahrens der Ausrichteinheiten eine Absinkgeschwindigkeit einstellbar. Zudem kann die Vorrichtung derart auch zur Herstellung von Elektrodenstapeln mit unterschiedlichen Außenmaßen verwendet werden.

Gemäß einer vorteilhaften Weiterbildung weist die Vorrichtung eine Bremseinheit mit einem Luftauslass zur Erzeugung eines Brems-Luftstroms auf, welcher die in den Fertigungsbereich geförderten Anoden und Kathoden bzw. die in den Fertigungsbereich geförderten Monozellen entgegen der Förderrichtung, also der Richtung in welcher die Anoden und die Kathoden bzw. die Monozellen in den Fertigungsbereich gefördert werden, abbremst. Anhand des Brems-Luftstroms ist somit ein Anschlagen an der der Fördereinrichtung gegenüberliegenden Ausrichteinheit und damit die Gefahr einer Beschädigung vermieden.

Gemäß einer geeigneten Ausgestaltung weist die Vorrichtung eine Horizontal-Ausrichteinheit auf. Diese ist im Bereich der Fördereinrichtung angeordnet und begrenzt den Fertigungsbereich in Hochrichtung. Die Horizontal-Ausrichteinheit weist dabei einen Luftauslass, vorzugsweise mehrere Luftauslässe, auf mittels welchem ein im Wesentlichen entgegen der Hochrichtung strömender Vertikal-Luftstrom erzeugbar ist.

Je nach Ausgestaltung der Fördereinrichtung, beispielsweise sofern diese als ein Förderband ausgestaltet ist, verlässt das bezüglich der Förderrichtung, entlang welcher die Anoden und die Kathoden bzw. die Monozellen in den Fertigungsbereich gefördert werden, vordere Ende der Anoden und der Kathoden bzw. der Monozellen die Fördereinrichtung zeitlich vor deren hinteren Ende. Infolge dessen beginnt das vordere Ende bereits früher abzusinken als das hintere Ende der jeweiligen Elektrode bzw. der jeweiligen Monozelle. Nach dem Verlassen des hinteren Endes, also nach dem vollständigen Verlassen der Fördereinrichtung, wird anhand des Vertikal-Luftstroms die jeweilige Elektrode bzw. die jeweilige Monozelle horizontal ausgerichtet. Insbesondere wirkt der Vertikal-Luftstrom hierzu auf das hintere Ende der jeweiligen Elektrode bzw. der jeweiligen Monozelle ein, so dass das hintere Ende zum Boden hin gedrückt wird.

Alternativ oder zusätzlich hierzu werden die Elektroden bzw. die Monozellen geneigt gegen den Boden in den Fertigungsbereich gefördert, so dass die Elektroden nach dem vollständigen Verlassen der Fördereinrichtung im Wesentlichen horizontal ausgerichtet sind. Beispielsweise ist das Förderband hierzu entsprechend geneigt, mit anderen Worten verläuft die Förderrichtung also geneigt gegen den Boden.

Beispielsweise ist die Horizontal-Ausrichteinheit zusätzlich zum Boden des Fertigungsbereichs hin verfahrbar. Auf diese Weise kann der auf dem Boden angeordnete Elektrodenstapel verdichtet, also die Zwischenräume zwischen den Elektroden bzw. zwischen den Monozellen verkleinert, werden.

Gemäß einer vorteilhaften Ausgestaltung sind die den Fertigungsbereich begrenzenden Flächen der Ausrichteinheiten gegen die Hochrichtung geneigt.

Sofern in Hochrichtung mehrere Ausrichteinheiten übereinander angeordnet sind, liegt jeweils das obere Ende der unteren Ausrichteinheit vorzugsweise am unteren Ende der darüber angeordneten Ausrichteinheit an. Die beiden übereinander angeordneten Ausrichteinheiten sind vorzugsweise also nicht beabstandet in Hochrichtung zueinander angeordnet.

Allenfalls ist zweckmäßigerweise das hinsichtlich der Hochrichtung obere Ende der jeweiligen Ausrichteinheit nach außen geneigt, mit anderen Worten von der dieser gegenüberliegenden Ausrichteinheit weg geneigt. Der von den Ausrichteinheiten (zumindest abschnittsweise) begrenzte Fertigungsbereich ist somit trichterförmig. Mit anderen Worten verjüngt sich der Fertigungsbereich entgegen der Hochrichtung.

Die den Fertigungsbereich begrenzende Fläche bilden dabei eine, insbesondere ebene, Führungsfläche für den Luftstrom und/oder, sofern die Anoden und die Kathoden im Zuge deren Absinken die Ausrichteinheit berühren, für die Anoden und die Kathoden bzw. für die Monozellen.

Nachfolgend werden Ausführungsbeispiele der Erfindung anhand einer Zeichnung näher erläutert. Darin zeigen:
- Fig. 1a: schematisch in einer Seitenansicht eine Vorrichtung zur Herstellung eines Elektrodenstapels, wobei die Vorrichtung eine Fördereinrichtung aufweist, welche Monozellen mit jeweils einer Anode und einer Kathode beabstandet zu einem Boden in einen Fertigungsbereich fördert, und wobei die Vorrichtung Ausrichteinheiten aufweist, anhand welcher die Monozellen ausgerichtet werden,
- Fig. 1b: schematisch die Vorrichtung, wobei anhand der Fördereinrichtung ein Stapel aus aufeinandergelegten, jedoch nicht zueinander ausgerichteten Anoden und Kathoden in den Fertigungsbereich gefördert wird,
- Fig. 2: schematisch in einer Draufsicht die Vorrichtung, wobei die Ausrichteinheiten den Fertigungsbereich in einer Ebene senkrecht zur Hochrichtung umfangsseitig begrenzen, und
- Fig. 3: in einem Flussdiagramm einen Verfahrensablauf zur Herstellung des Elektrodenstapels.

Einander entsprechende Teile und Größen sind in allen Figuren stets mit gleichen Bezugszeichen versehen.

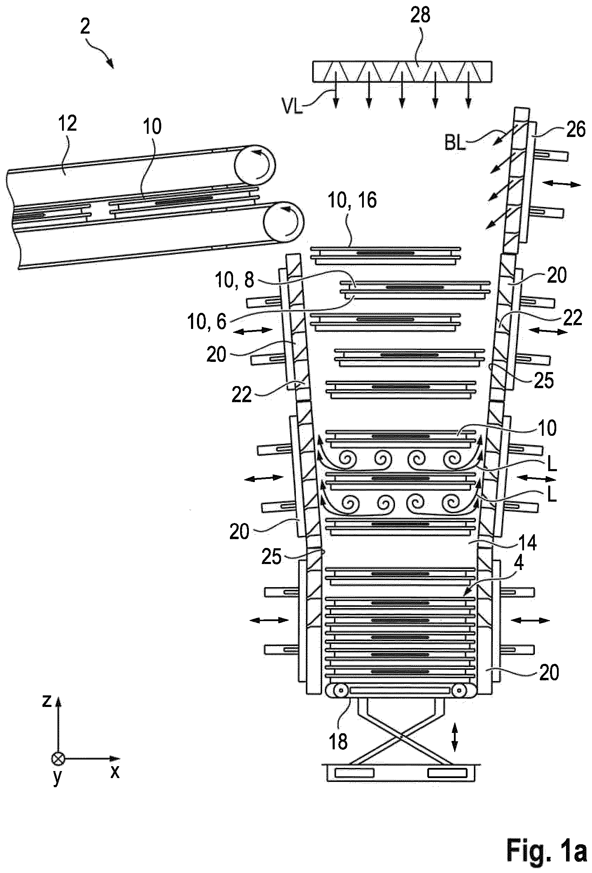

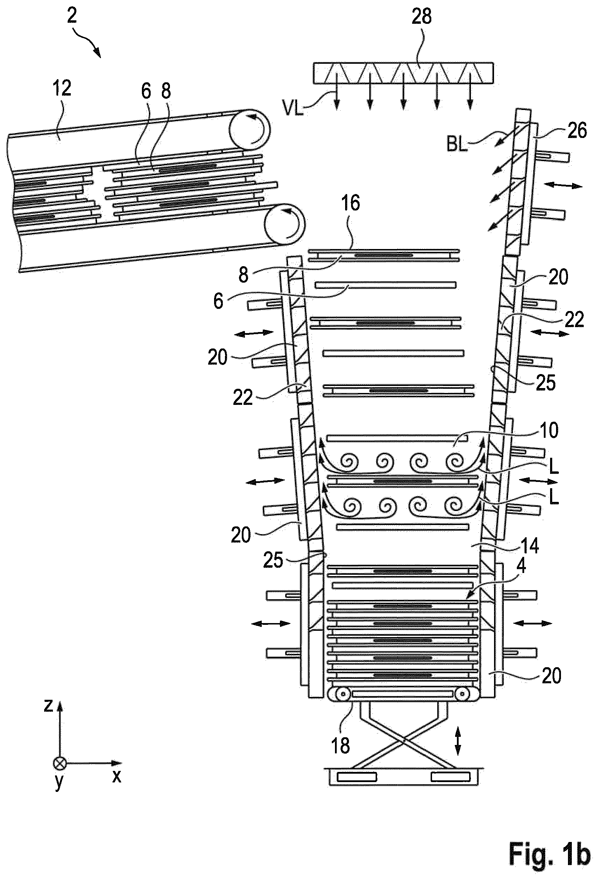

In den Figuren 1a und 1b ist eine Vorrichtung 2 dargestellt, die der Herstellung eines Elektrodenstapels 4 dient, welcher aus Anoden 6 und Kathoden 8 gebildet ist.

Hierzu weist die Vorrichtung 2 eine Fördereinrichtung 12 auf. Die Vorrichtung 2 ist gemäß diesem Ausführungsbeispielen mittels zweier Förderbänder gebildet. Diese sind parallel zueinander orientiert, wobei die beiden Förderbänder entgegengesetzte Umlaufrichtungen aufweisen. Das geförderte Gut wird dabei zwischen die beiden Förderbänder eingebracht, wobei beide Förderbänder das Gut berühren. Bei entsprechend hohen Fördergeschwindigkeiten des geförderten Gutes ist somit ein unerwünschtes Abheben dessen aufgrund eines Auftriebes durch die Umgebungsluft vermieden.

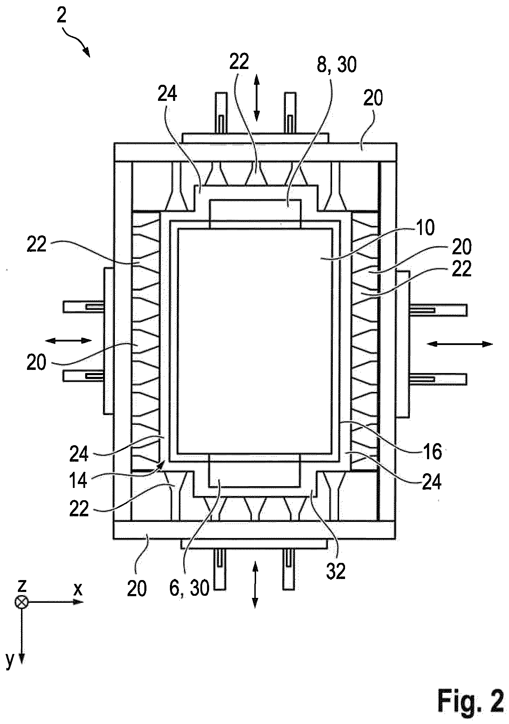

Anhand der Fördereinrichtung 12 werden Monozellen 10 (Fig. 1a) zeitlich nacheinander in einen Fertigungsbereich 14 gefördert. Jede der Monozellen 10 weist eine einzige Anode 6 und eine einzige Kathode 8 auf. Sowohl zwischen der Anode 6 und der Kathode 8 als auch an der der Anode 6 abgewandten Seite der Kathode 8 ist jeweils ein Separator 16 angeordnet, wobei die Anode 6, die Kathode 8 und die Separatoren 16 mittels eines Laminationsprozesses miteinander gefügt sind. Der Separator ist dabei in Fig. 2 transparent dargestellt.

Gemäß der alternativen Ausgestaltung der Fig. 1b werden mittels der Fördereinrichtung zueinander separate Anoden 6 und Kathoden 8 in den Fertigungsbereich 14 gefördert. Dabei sind die Kathoden 8 beidseitig mit einem Separator 16 versehen. Eine Teilanzahl der Anoden 6 und der Kathoden 8 sind dabei zeitlich vor deren Fördervorgang in den Fertigungsbereich 14 aufeinandergelegt worden, so dass die aufeinanderliegenden Anoden 6 und Kathoden 8 anhand der Fördereinrichtung 12 gleichzeitig in den Fertigungsbereich 14 gefördert werden.

Gemäß zweier nicht weiter dargestellten Alternativen werden entweder die Anoden 6 und die Kathoden 8 alternierend und zeitlich aufeinanderfolgend oder alternativ aufeinandergelegte, jedoch zueinander nicht ausgerichtete, Monozellen 10 in den Fertigungsbereich 14 gefördert. Die nachfolgenden Ausführungen gelten dabei in analoger Weise.

Hierbei ist die Fördereinrichtung 12 in Hochrichtung Z beabstandet zum Boden 18 des Fertigungsbereichs 14 angeordnet, so dass die einzelnen Anoden 6 und Kathoden 8 bzw. die Monozellen 10 nach Verlassen der Fördereinrichtung 12 aufgrund der Schwerkraft zum Boden 18 hin absinken.

Der Fertigungsbereich 14, welcher auch als Stapelfach oder als Stapelkammer bezeichnet wird, ist in einer Ebene senkrecht zu Hochrichtung Z durch plattenförmig ausgebildeten und einander gegenüberliegenden Ausrichteinheiten 20 begrenzt. Mit anderen Worten begrenzen die Ausrichteinheiten 20 den Fertigungsbereich 14 umfangsseitig in zwei zueinander und zur Hochrichtung Z senkrechten Richtungen X, Y.

In Hochrichtung Z sind mehrere Ausrichteinheiten 20 übereinander angeordnet. Dabei liegt jeweils das obere Ende der unteren Ausrichteinheit 20 vorzugsweise am unteren Ende der darüber angeordneten Ausrichteinheit 20 an. Die beiden übereinander angeordneten Ausrichteinheiten sind vorzugsweise also nicht beabstandet in Hochrichtung Z zueinander angeordnet.

Zum Zweck einer besseren Übersichtlichkeit sind dabei in der Fig. 1 die den Fertigungsbereich 14 in bzw. gegen die Y-Richtung begrenzenden Ausrichteinheiten 20 nicht weiter dargestellt.

Jede der Ausrichteinheiten 20 weist dabei mehrere Luftauslässe 22 aus, anhand welchen ein Luftstrom innerhalb des Fertigungsbereichs 14 erzeugt werden kann. Die Luftauslässe 22 sind hierzu in nicht näher dargestellter Weise mit einem Gebläse oder einem Kompressor oder dergleichen strömungstechnisch verbunden. Die Luftauslässe 22 sind hierbei als eine Luftdüse ausgebildet. Zum Zwecke einer besseren Übersichtlichkeit sind dabei lediglich einige der Luftauslässe 22 mit einem Bezugszeichen versehen. Gemäß einer nicht weiter dargestellten Alternative sind die Luftauslässe 22 als Diffusoren ausgebildet.

Die Luftauslässe 22 dienen der Erzeugung eines Luftstroms L, welcher in den Figuren 1a und 1b lediglich bereichsweise, nämlich unterhalb zwei der Monozellen 10 bzw. unterhalb zwei der Kathoden 8, dargestellt ist. Anhand des Luftstroms L werden die Anoden 6 und die Kathoden 8 (Fig. 1b) bzw. die Monozellen 10 (Fig. 1a), zueinander und/oder zu einer vorgegebenen Sollposition, beispielsweise bezüglich der Mittelachse des Fertigungsbereichs 14, ausgerichtet.

Hierzu wird vorzugsweise ionisierte Luft von einander gegenüberliegenden Ausrichteinheiten 20 unter jede der in den Fertigungsbereich 14 geförderten und absinkenden Anoden 6 und unter jede der in den Fertigungsbereich 14 geförderten und absinkenden Kathoden 8 bzw. unter jede der in den Fertigungsbereich 14 geförderten und absinkenden Monozellen 10 eingeblasen.

Die Einleitrichtung ist dabei entweder parallel zum Boden des Fertigungsbereichs oder lediglich geringfügig gegen den Boden nach oben (also in Hochrichtung Z) orientiert. Unter geringfügig geneigt ist hierbei zu verstehen, dass ein Winkel zwischen dem Boden 18 und der Einleitrichtung der Luft maximal 30° beträgt.

Auf diese Weise bildet sich unter jeder der Anoden 6 und unter jeder der Kathoden (Fig. 1b) bzw. unter jeder der Monozellen 10 (Fig. 1a) eine Verwirbelung, so dass das Absinken der Elektroden 6, 8 bzw. der Monozellen 10 verlangsamt wird.

Zwischen den absinkenden Elektroden 6, 8 bzw. zwischen den Monozellen 10 und den Ausrichteinheiten 20 ist ein Spalt 24 gebildet, durch welchen die unter die jeweilige Elektrode 6, 8 bzw. unter die jeweilige Monozelle 10 eingeleitete Luft in Hochrichtung Z abströmt. Aufgrund dieses seitlichen Vorbeiströmens wirkt eine Kraft auf die jeweilige Anode 6 oder die jeweilige Kathode 8 bzw. auf die jeweilige Monozelle 10, so dass diese zu einer Mittelachse des Fertigungsbereichs 14 hin ausgerichtet wird.

Die Ausrichteinheiten 20 sind zudem quer zur Hochrichtung Z, also in Richtung bzw. in Y-Richtung, verfahrbar, was in den Figuren 1a, 1b und 2 anhand eines Doppelpfeils dargestellt ist. Folglich kann eine Ausdehnung des Spaltes 16 in der von der X-Richtung und der Y-Richtung aufgespannten Ebene eingestellt werden. Zudem bildet sich ein Spalt zwischen den Ausrichteinheiten 20 in dieser Ebene, durch welchen ebenfalls Luft aus dem Fertigungsbereich 14 entweichen kann. Durch ein derartiges Einstellen der Spaltgröße ist die Strömungsgeschwindigkeit und/oder die Menge der seitlich an der jeweiligen Anode 6 oder der jeweiligen Kathode 8 der jeweiligen Monozelle 10 und damit einhergehend deren Sinkgeschwindigkeit einstellbar.

Die vom Boden 18 beabstandet angeordneten Ausrichteinheiten 20 sind gegen die Hochrichtung Z geneigt. Mit anderen Worten ist ein Winkel zwischen der Hochrichtung Z und der von der plattenförmigen Ausrichteinheit größer als Null. Dabei ist das obere Ende jeder dieser Ausrichteinheiten 20 nach außen, also von der dieser gegenüberliegenden Ausrichteinheit weg, geneigt. Der Fertigungsbereich 14 ist somit in Z-Richtung trichterförmig. Die den Fertigungsbereich 14 begrenzende Flächen 25 dieser Ausrichteinheiten 20 bilden dabei eine Führungsfläche für den Luftstrom und für die Anoden 6 und die Kathoden 8 bzw. für die Monozellen 10, falls diese im Zuge deren Absinken die Ausrichteinheit 20 berühren.

Des Weiteren weist die Vorrichtung 2 eine Bremseinheit 26 auf. Diese umfasst ebenfalls mehrere als Luftdüsen ausgebildete Luftauslässe 22 zur Erzeugung eines Brems-Luftstroms BL. Dieser bremst die in den Fertigungsbereich 14 geförderten Monozellen 10 entgegen der Förderrichtung, in welcher die Monozellen 10 in den Fertigungsbereich eingebracht werden, ab, so dass ein Anschlagen der Monozellen 10 an derjenigen Ausrichteinheit 20, welche der Fördereinrichtung 12 in Förderrichtung gegenüberliegt, vermieden.

Weiterhin ist im Bereich der Fördereinrichtung 12 eine Horizontal-Ausrichteinheit 28 der Vorrichtung 2 angeordnet. Diese ist dabei über dem Boden 18 und hinsichtlich der in Hochrichtung oberhalb der Fördereinrichtung 12 angeordnet. Zur Erzeugung eines entgegen der Hochrichtung Z orientierten Vertikal-Luftstroms VL weist die Horizontal-Ausrichteinheit 28 in analoger Weise zu den Ausrichteinheiten 20 mehrere Luftauslässe 22 auf.

Wie insbesondere in der Fig. 2 erkennbar ist, weisen die Anoden 6 sowie die Kathoden 8 der Monozelle jeweils eine auch als Tab bezeichnete elektrische Kontaktierung 30 auf. Die Kontaktierungen 30 ragen dabei in der mittels der mittels der jeweiligen Anode 6 bzw. mittels der jeweiligen Kathode 8 aufgespannten Ebene in bzw. gegen die Y-Richtung über den Separator 16 hinaus. Gemäß einem nicht weiter dargestellten Ausführungsbeispiel ragen die Kontaktierungen 30 der Anoden 6 und die Kontaktierungen 30 der Kathoden 8 zur selben Seite über den Separator 16 hinaus, wobei diese in Richtung der Kante dieser Seite, also in X-Richtung, zueinander beabstandet sind.

Allenfalls weisen die entsprechenden Ausrichteinheiten 20, gemäß der Fig.2 diejenigen, welche den Fertigungsbereich in bzw. gegen die Y-Richtung begrenzen, jeweils eine in Z-Richtung durchgehende Aussparung 32 für die Kontaktierungen 30 auf. Folglich ist eine Beschädigung der Kontaktierung 30 im Zuge des Absinkens der Monozelle 10 vermieden.

Dies gilt in analoger Weise für den Fall, dass die Kathoden 8 und die Anoden 6 einzeln, also separat zueinander in den Fertigungsbereich gefördert werden.

In der Fig. 2 sind dabei zum Zweck einer besseren Übersichtlichkeit die Bremseinheit 26, die Horizontal-Ausrichteinheit 28 sowie die in Hochrichtung Z über bzw. unter den dargestellten Ausrichteinheiten 20 angeordneten Ausrichteinheiten 20 nicht weiter dargestellt.

Der Boden 18 ist mittels eines höhenverstellbaren Förderbands gebildet. Dies ist in den Figuren 1a und 1b anhand eines Doppelpfeils gezeigt. Der Elektrodenstapel 4 ist somit in einfacher Weise durch ein Absenken des Förderbandes, also durch ein Verstellen des Förderbands entgegen der Hochrichtung Z aus dem Fertigungsbereich verfahrbar. Beispielsweise wird der Elektrodenstapel 4 mittels des Förderbandes und gegebenenfalls mittels weiterer Förderbänder zu einem Lager gefördert oder für einen weiteren Herstellungsprozess der Lithium-Ionen-Batterie bereitgestellt.

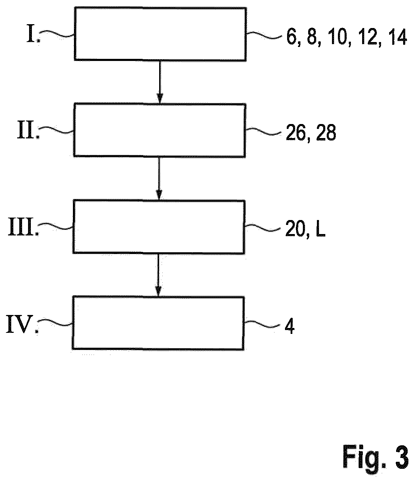

Das in der Fig. 3 gezeigte Flussdiagramm repräsentiert das im Zusammenhang mit den Figuren 1a, 1b und 2 bereits dargestellte Verfahren zur Herstellung eines Elektrodenstapels 4 aus Anoden 6 und Kathoden 8 bzw. aus Monozellen 10.

Zusammenfassend werden die Anoden 6 und die Kathoden 8 bzw. die Monozellen 10 beabstandet zum dessen Boden 18 anhand der Fördereinrichtung 12 in den Fertigungsbereich 14 gefördert (Schritt I.). Anschließend werden die die Anoden 6 und die Kathoden 8 bzw. die Monozellen 10 anhand der Bremseinheit 26 entgegen der Förderrichtung abgebremst und anhand der Horizontal-Ausrichteinheit 28 horizontal ausgerichtet (Schritt II.).

Die im Fertigungsbereich 14 entgegen der Hochrichtung Z absinkenden Anoden 6 und Kathoden 8 bzw. die absinkenden Monozellen 10 werden anhand eines im Fertigungsbereich 14 erzeugten Luftstroms L zueinander und zu einer Soll-Position ausgerichtet (Schritt III.), so dass unter Bildung des Elektrodenstapels 4 die die Anoden 6 und die Kathoden 8 bzw. die Monozellen 10 ausgerichtete zueinander auf dem Boden gestapelt bzw. ausgerichtete zueinander aufeinander abgelegt werden (Schritt IV).

Hierzu (für Schritt III.) wird von zwei gegenüberliegenden Seiten des Fertigungsbereichs 14 die Luft unter jede der Anoden 6 und unter jede der Kathoden 8 bzw. unter jede der Monozellen 10 eingeleitet. Zur Erzeugung des Luftstroms L wird die Luft entweder parallel zum Boden 18 des Fertigungsbereichs 14 oder lediglich geringfügig gegen den Boden 18 geneigt in dem Fertigungsbereich 14 eingeblasen. Dabei wird die Luft entweder zeitlich konstant hinsichtlich deren Einleitrichtung und hinsichtlich deren Strömungsstärke in den Fertigungsbereich 14 eingeleitet oder alternativ hierzu wird die Strömungsstärke und/oder die Einleitrichtung der für die Erzeugung des Luftstroms L einzuleitenden Luft eingestellt oder variiert.

Die Erfindung ist nicht auf die vorstehend beschriebenen Ausführungsbeispiele beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, innerhalb des Schutzumfangs der beiliegenden Ansprüche.

### Bezugszeichenliste

- 2: Vorrichtung
- 4: Elektrodenstapel
- 6: Anode
- 8: Kathode
- 10: Monozelle
- 12: Fördereinrichtung
- 14: Fertigungsbereich
- 16: Separator
- 18: Boden des Fertigungsbereichs
- 20: Ausrichteinheit
- 22: Luftauslass
- 24: Spalt
- 25: Fläche der Ausrichteinheit
- 26: Bremseinheit
- 28: Horizontal-Ausrichteinheit
- 30: Kontaktierung
- 32: Aussparung

- L: Luftstrom
- BL: Brems-Luftstrom
- VL: Vertikal-Luftstrom
- X: Richtung
- Y: Richtung
- Z: Hochrichtung

- I.: Fördern der Anoden und der Kathoden bzw. der Monozellen
- II.: Abbremsen der Anoden und der Kathoden bzw. der Monozellen
- III.: Ausrichten der Anoden und der Kathoden bzw. der Monozellen
- IV.: Bildung des Elektrodenstapels

## Patentansprüche

1. Verfahren zur Herstellung eines Elektrodenstapels (4) aus Anoden (6) und Kathoden (8) für eine Lithium-Ionen-Batterie, insbesondere eines elektrisch angetriebenen Kraftfahrzeugs,
- bei dem die Anoden (6) und die Kathoden (8) oder eine Anzahl an Monozellen (10), von denen jede eine der Anoden (6) und eine der Kathoden (8) aufweist, in einen Fertigungsbereich (14) gefördert werden, wobei die Anoden (6) und die Kathoden (8) bzw. die Monozellen (10) in Hochrichtung (Z) beabstandet zu einem Boden (18) des Fertigungsbereichs (14) in diesen gefördert werden, so dass die Anoden (6) und die Kathoden (8) bzw. die Monozellen (10) zum Boden (18) hin absinken,
- bei dem innerhalb des Fertigungsbereichs (14) durch Einleiten von Luft ein Luftstrom (L) erzeugt wird, und
- bei dem die Anoden (6) und die Kathoden (8) bzw. die Monozellen (10) im Zuge deren Absinken anhand des Luftstroms (L) zueinander ausgerichtet werden,
- wobei zum Ausrichten anhand des Luftstroms (L) von zwei gegenüberliegenden Seiten des Fertigungsbereichs (14) die Luft unter jede der Anoden (6) und unter jede der Kathoden (8) bzw. unter jede der Monozellen (10) eingeleitet wird, wobei die Luft zur Erzeugung des Luftstroms (L) parallel zum Boden (18) des Fertigungsbereichs (14) oder mit einem Winkel zwischen dem Boden (18) und der Einleitrichtung der Luft von maximal 30° gegen den Boden (18) geneigt in den Fertigungsbereich (14) eingeleitet wird.

2. Verfahren nach Anspruch 1,
**dadurch gekennzeichnet,**
- **dass** die Anoden (6) und die Kathoden (8) oder eine Teilanzahl der Anoden (6) und der Kathoden (8) zeitlich vor deren Fördervorgang in den Fertigungsbereich (14) aufeinandergelegt und aufeinander liegend in den Fertigungsbereich (14) gefördert werden, oder
- **dass** die Monozellen (10) oder eine Teilanzahl der Monozellen (10) zeitlich vor deren Fördervorgang in den Fertigungsbereich (14) aufeinandergelegt und aufeinander liegend in den Fertigungsbereich (14) gefördert werden.

3. Verfahren nach Anspruch 1 oder 2,
**dadurch gekennzeichnet,**
- **dass** die Luft ionisiert ist, und/oder
- **dass** die Luft zeitlich konstant hinsichtlich deren Einleitrichtung und hinsichtlich deren Strömungsstärke in den Fertigungsbereich (14) eingeleitet wird.

4. Verfahren nach einem der Ansprüche 1 bis 3,
**dadurch gekennzeichnet,**
**dass** die Strömungsstärke und/oder die Einleitrichtung der für die Erzeugung des Luftstroms (L) einzuleitenden Luft einstellbar sind.

5. Vorrichtung (2) zur Herstellung eines Elektrodenstapels (4) aus Anoden (6) und Kathoden (8) für eine Li-lonen-Batterie gemäß dem Verfahren nach einem der Ansprüche 1 bis 4, aufweisend
- eine Fördereinrichtung (12) zum Fördern der Anoden und der Kathoden oder zum Fördern von Monozellen, von denen jede eine der Anoden (6) und eine der Kathoden (8) aufweist, in einen Fertigungsbereich (14), wobei die Fördereinrichtung (12) in Hochrichtung (Z) beabstandet zu einem Boden (18) des Fertigungsbereichs (14) angeordnet ist, und
- mindestens zwei Ausrichteinheiten (20) mit jeweils mindestens einem Luftauslass (22) zur Erzeugung eines Luftstroms (L) für das Ausrichten der Anoden (6) und der Kathoden (8) bzw. für das Ausrichten der Monozellen (10),
- wobei die Ausrichteinheiten (20) den Fertigungsbereich (14) in bzw. gegen eine quer zur Hochrichtung (Z) orientierten Richtung (X) zumindest abschnittsweise begrenzen.

6. Vorrichtung (2) nach Anspruch 5,
**dadurch gekennzeichnet,**
**dass** die Ausrichteinheiten (20) quer zur Hochrichtung (Z) des Fertigungsbereichs (14) verfahrbar sind.

7. Vorrichtung (2) nach Anspruch 5 oder 6,
**gekennzeichnet durch**
eine Bremseinheit (26) mit einem Luftauslass (22) zur Erzeugung eines Brems-Luftstroms (BL), der die in den Fertigungsbereich (14) geförderten Anoden (6) und Kathoden (8) bzw. die in den Fertigungsbereich (14) geförderten Monozellen (10) entgegen der Förderrichtung abbremst.

8. Vorrichtung (2) nach einem der Ansprüche 5 bis 7,
**gekennzeichnet durch**
eine Horizontal-Ausrichteinheit (28), welche im Bereich der Fördereinrichtung (12) angeordnet ist und den Fertigungsbereich (14) in Hochrichtung (Z) begrenzt, wobei die Horizontal-Ausrichteinheit (28) einen Luftauslass (22) aufweist, mittels welchem ein im Wesentlichen entgegen der Hochrichtung (Z) strömender Vertikal-Luftstrom (VL) erzeugbar ist.

9. Vorrichtung (2) nach einem der Ansprüche 5 bis 8,
**dadurch gekennzeichnet,**
**dass** die den Fertigungsbereich (14) begrenzenden Flächen (25) der Ausrichteinheiten (20) gegen die Hochrichtung (Z) geneigt sind.

## Claims

1. Method for producing an electrode stack (4) comprising anodes (6) and cathodes (8) for a lithium-ion battery, in particular an electrically driven motor vehicle,
- in which the anodes (6) and the cathodes (8) or a number of monocells (10), each of which has one of the anodes (6) and one of the cathodes (8), are conveyed into a production region (14), wherein the anodes (6) and the cathodes (8) or the monocells (10) are conveyed into the production region at a distance from a floor (18) of the production region (14) in the vertical direction (Z), so that the anodes (6) and the cathodes (8) or the monocells (10) drop towards the floor (18),
- in which an air flow (L) is generated within the production region (14) by introducing air, and
- in which the anodes (6) and the cathodes (8) or the monocells (10) are aligned with each other by means of the air flow (L) as they fall,
- wherein, for alignment by means of the air flow (L), the air is introduced beneath each of the anodes (6) and beneath each of the cathodes (8) or beneath each of the monocells (10) from two opposite sides of the production region (14), wherein the air for generating the air flow (L) is introduced into the production region (14) parallel to the floor (18) of the production region (14) or inclined in relation to the floor (18) at an angle between the floor (18) and the introduction direction of air of at most 30°.

2. Method according to Claim 1,
**characterized**
- **in that** the anodes (6) and the cathodes (8) or some of the anodes (6) and the cathodes (8) are placed one on the other before the process of conveying them into the production region (14) and are conveyed into the production region (14) lying one on the other, or
- **in that** the monocells (10) or some of the monocells (10) are placed one on the other before the process of conveying them into the production region (14) and are conveyed into the production region (14) lying one on the other.

3. Method according to Claim 1 or 2,
**characterized**
- **in that** the air is ionized, and/or
- **in that** the air is introduced into the production region (14) in a constant manner in terms of its introduction direction and in terms of its flow strength over time.

4. Method according to any of Claims 1 to 3,
**characterized**
**in that** the flow strength and/or introduction direction of the air to be introduced for generating the air flow (L) can be adjusted.

5. Apparatus (2) for producing an electrode stack (4) comprising anodes (6) and cathodes (8) for a Li-ion battery in line with the method according to any of Claims 1 to 4, comprising
- a conveying device (12) for conveying the anodes and cathodes or for conveying monocells, each of which comprises one of the anodes (6) and one of the cathodes (8), into a production region (14), wherein the conveying device (12) is arranged at a distance from a floor (18) of the production region (14) in the vertical direction (Z), and
- at least two alignment units (20) each with at least one air outlet (22) for generating an air flow (L) for aligning the anodes (6) and the cathodes (8) or for aligning the monocells (10),
- wherein the alignment units (20) delimit the production region (14) in or opposite to a direction (X) oriented transversely to the vertical direction (Z) at least in sections.

6. Apparatus (2) according to Claim 5,
**characterized**
**in that** the alignment units (20) can be moved transversely to the vertical direction (Z) of the production region (14).

7. Apparatus (2) according to Claim 5 or 6,
**characterized by**
a braking unit (26) with an air outlet (22) for generating a braking air flow (BL), which decelerates the anodes (6) and cathodes (8) conveyed into the production region (14) or the monocells (10) conveyed into the production region (14) counter to the conveying direction.

8. Apparatus (2) according to any of Claims 5 to 7,
**characterized by**
a horizontal alignment unit (28), which is arranged in the region of the conveying device (12) and delimits the production region (14) in the vertical direction (Z), wherein the horizontal alignment unit (28) has an air outlet (22), by means of which a vertical air flow (VL) which flows substantially counter to the vertical direction (Z) can be generated.

9. Apparatus (2) according to any of Claims 5 to 8,
**characterized**
**in that** the surfaces (25) of the alignment units (20) delimiting the production region (14) are inclined in relation to the vertical direction (Z).

## Revendications

1. Procédé pour produire un empilement d'électrodes (4) constitué d'anodes (6) et de cathodes (8) pour une batterie lithium-ion, en particulier d'un véhicule automobile à propulsion électrique,
- selon lequel les anodes (6) et les cathodes (8) ou une pluralité de monocellules (10), chacune d'elles comprenant l'une des anodes (6) et l'une des cathodes (8), sont acheminées vers une zone de fabrication (14), les anodes (6) et les cathodes (8) ou les monocellules (10) étant acheminées vers ladite zone dans la direction verticale (Z) de manière espacée d'un fond (18) de la zone de fabrication (14), de telle sorte que les anodes (6) et les cathodes (8) ou les monocellules (10) descendent en direction du fond (18),
- selon lequel un courant d'air (L) est généré à l'intérieur de la zone de fabrication (14) par apport d'air, et
- selon lequel les anodes (6) et les cathodes (8) ou les monocellules (10) sont orientées les unes vers les autres à l'aide du courant d'air (L) au cours de leur descente,
- l'air étant introduit depuis deux côtés opposés de la zone de fabrication (14) sous chacune des anodes (6) et sous chacune des cathodes (8) ou sous chacune des monocellules (10) pour l'orientation à l'aide du courant d'air (L), l'air destiné à générer le courant d'air (L) étant introduit dans la zone de fabrication (14) parallèlement au fond (18) de la zone de fabrication (14) ou de manière inclinée par rapport au fond (18) avec un angle maximal de 30° entre le fond (18) et la direction d'introduction de l'air.

2. Procédé selon la revendication 1,
**caractérisé**
- **en ce que** les anodes (6) et les cathodes (8) ou une partie des anodes (6) et des cathodes (8), avant leur acheminement vers la zone de fabrication, sont superposées les unes aux autres (14) et sont acheminées en étant placées les unes sur les autres vers la zone de fabrication (14), ou
- **en ce que** les monocellules (10) ou une partie des monocellules (10), avant leur acheminement vers la zone de fabrication (14), sont superposées les unes aux autres et sont acheminées en étant placées les unes sur les autres vers la zone de fabrication (14).

3. Procédé selon la revendication 1 ou 2,
**caractérisé**
- **en ce que** l'air est ionisé, et/ou
- **en ce que** l'air est introduit dans la zone de fabrication (14) de manière temporellement constante en ce qui concerne sa direction d'introduction et son intensité de courant.

4. Procédé selon l'une quelconque des revendications 1 à 3,
**caractérisé**
**en ce que** l'intensité de courant et/ou la direction d'introduction de l'air à introduire pour générer le courant d'air (L) sont réglables.

5. Dispositif (2) pour produire un empilement d'électrodes (4) constitué d'anodes (6) et de cathodes (8) pour une batterie Li-ion conformément au procédé selon l'une quelconque des revendications 1 à 4, comprenant
- un dispositif d'acheminement (12) pour acheminer les anodes et les cathodes ou pour acheminer des monocellules, chacune d'elles comprenant l'une des anodes (6) et l'une des cathodes (8), vers une zone de fabrication (14), le dispositif d'acheminement (12) étant disposé dans la direction verticale (Z) de manière espacée d'un fond (18) de la zone de fabrication (14), et
- au moins deux unités d'orientation (20) respectivement dotées d'au moins une sortie d'air (22) destinée à générer un courant d'air (L) pour l'orientation des anodes (6) et des cathodes (8) ou pour l'orientation des monocellules (10),
- les unités d'orientation (20) délimitant au moins par sections la zone de fabrication (14) dans ou par rapport à une direction (X) orientée transversalement à la direction verticale (Z).

6. Dispositif (2) selon la revendication 5,
**caractérisé**
**en ce que** les unités d'orientation (20) peuvent être déplacées transversalement à la direction verticale (Z) de la zone de fabrication (14).

7. Dispositif (2) selon la revendication 5 ou 6,
**caractérisé par**
une unité de freinage (26) dotée d'une sortie d'air (22) destinée à générer un courant d'air de freinage (BL), qui freine les anodes (6) et les cathodes (8) acheminées vers la zone de fabrication (14) ou les monocellules (10) acheminées vers la zone de fabrication (14) en sens opposé à la direction d'acheminement.

8. Dispositif (2) selon l'une quelconque des revendications 5 à 7,
**caractérisé par**
une unité d'orientation horizontale (28), qui est agencée dans la zone du dispositif d'acheminement (12) et délimite la zone de fabrication (14) dans la direction verticale (Z), l'unité d'orientation horizontale (28) présentant une sortie d'air (22) au moyen de laquelle un courant d'air vertical (VL) s'écoulant sensiblement en sens opposé à la direction verticale (Z) peut être généré.

9. Dispositif (2) selon l'une quelconque des revendications 5 à 8,
**caractérisé**
**en ce que** les surfaces (25) des unités d'orientation (20) délimitant la zone de fabrication (14) sont inclinées par rapport à la direction verticale (Z).
